# EUROPEAN PATENT SPECIFICATION

(11) **EP 2 582 763 B1**
(45) Date of publication and mention of the grant of the patent: **27.09.2017**
(21) Application number: 10853366.2
(22) Date of filing: 17.06.2010
(51) Int. Cl.: C09D 11/10, C09D 11/00, C09D 175/04, C09D 175/08

(54) **POLYURETHANE-CONTAINING INKJET INK**
POLYURETHANHALTIGE TINTENSTRAHLTINTE
ENCRE POUR IMPRESSION JET D'ENCRE CONTENANT UN POLYURÉTHANE

(43) Date of publication of application: 24.04.2013
(73) Proprietor: Hewlett-Packard Development Company, L.P., Houston, TX 77070 (US)
(72) Inventor: IU, Kai-Kong, San Diego California 92127-1899 (US); LI, Shao-Wei, San Diego California 92127-1899 (US); GUO, Dennis, Z., San Diego California 92127-1899 (US); BI, Yubai, San Diego California 92127-1899 (US); GUZMAN, Minedys, Macias, San Diego California 92127-1899 (US)
(74) Representative: HGF Limited
(86) International application number: PCT/US2010/039060
(87) International publication number: WO 2011/159306

(56) References cited:
- JP-A- 8 053 527
- JP-A- 2005 290 044
- US-A- 5 047 294
- US-A- 5 656 701
- US-A- 6 139 966
- US-A1- 2008 207 811
- US-A1- 2009 082 518

## Description

### BACKGROUND

There are several reasons that inkjet printing has become a popular way of recording images on various media surfaces, particularly paper and photo media substrates. Some of these reasons include low printer noise, capability of high-speed recording, and capability of multi-color recording. Additionally, these advantages can be obtained at a relatively low price to consumers. With respect to inkjet ink chemistry, the majority of commercial inkjet inks are water-based. Thus, their constituents are generally water-soluble, as is the case with many dyes, or water dispersible, as is the case with pigments. Furthermore, inkjet inks have low viscosity to accommodate high frequency jetting and firing chamber refill processes can be typical ink inkjet architecture. Furthermore, inks having positive printing characteristics with respect to inkjet architecture often have less than ideal performance on the printed page, and vice versa. Thus, finding specific formulations that perform well in a printer device as well as on print media would be an advancement in the art. JP-A-2005 290044 discloses an inkjet ink comprising a polyurethane binder having weight-average molecular weight of 3000 to 50000.

### DETAILED DESCRIPTION

Before the present invention is disclosed and described, it is to be understood that this disclosure is not limited to the particular process steps and materials disclosed herein because such process steps and materials may vary somewhat. It is also to be understood that the terminology used herein is used for the purpose of describing particular embodiments only. The terms are not intended to be limiting because the scope of the present disclosure is intended to be limited only by the appended claims and equivalents thereof.

It must be noted that, as used in this specification and the appended claims, the singular forms "a," "an," and "the" include plural referents unless the context clearly dictates otherwise.

As used herein, "liquid vehicle," "vehicle," or "liquid medium" refers to the fluid in which the colorant of the present disclosure can be dispersed or dissolved to form an inkjet ink. Liquid vehicles of various types are known in the art, and a wide variety of ink vehicles may be used in accordance with embodiments of the present disclosure. Such ink vehicles may include a mixture of a variety of different agents, including without limitation, surfactants, organic solvents and co-solvents, buffers, biocides, viscosity modifiers, sequestering agents, stabilizing agents, anti-kogation agents, and water. Though not part of the liquid vehicle per se, in addition to the colorants, the liquid vehicle can carry solid additives such as polymers, latexes, UV curable materials, plasticizers, salts, etc. Additionally, the term "aqueous liquid vehicle" or "aqueous vehicle" refers to a liquid vehicle including water as a solvent.

As used herein, "co-solvent" refers to any solvent, including organic solvent and/or water, present in a liquid vehicle.

As used herein, "colorant" can include dyes and/or pigments that may be used with a liquid vehicle to form an inkjet ink in accordance with some embodiments of the present disclosure. In one embodiment, the colorant can be used to impart color to the inkjet ink.

As used herein, "pigment" generally includes pigment colorants, magnetic particles, aluminas, silicas, and/or other ceramics, organo-metallics or other opaque particles, whether or not such particulates impart color. Thus, though the present description primarily exemplifies the use of pigment colorants, the term "pigment" can be used more generally to describe not only pigment colorants, but other pigments such as organometallics, ferrites, ceramics, etc. In one specific embodiment, however, the pigment is a pigment colorant.

As used herein, "dye" refers to compounds or molecules that impart color to a vehicle or compound incorporating the dye. Generally, dyes are water soluble.

As used herein, "decap" refers to the process of jetting a normal ink drop from pen nozzle by breaking the "plug" or "cap" of solidified ink. The plug or cap is currently understood to be generated by the evaporation of ink vehicle.

As used herein, "decap performance" refers to the number of electric pulses fired before a normal ink drop is once again jetted out of an orifice after the nozzle has been rested for a certain amount of time, forming a plug. In one embodiment, an "acceptable decap performance" can be defined as an inkjet pen nozzle firing an ink drop within 10 electric firing pulses after the nozzle is rested for 3.5 seconds.

With respect to determining decap performance, a "normal" ink drop refers to ink fired from an inkjet pen without misdirection.

As used herein, "decel" denotes an increase in ink flow resistance within pen micro-channels, which in turn, reduces ejected drop velocity. Such flow resistance can be caused by changes in ink rheology or plugged channels, and is often responsible for ink starvation within a pen firing chamber.

As used herein, "down swath variation" or "DSV" refers to a printing defect where the printing density of a first printed ink (from a nozzle that has been rested for certain amount time) is higher than normal. The printing density gradually recovers to normal in following printing. The variation is a mixed effect between pigment enrichment at the nozzle and dot placement caused by traditional ink drop deceleration (decel).

As used herein, "down swath variation performance" or "DSV performance" refers to the magnitude of reflection difference (a measure of printing density difference) between a reference swath where the pen is continuously jetting on the paper and the sample swath where the pen jets on the paper after the nozzles has been rested for certain amount of time. In one embodiment, an "acceptable down swath variation performance" or "acceptable DSV performance" can be defined as having a Δ Reflectance of less than or equal to 10 units after the nozzle has been rested for 0.5 second. With this general definition in mind, other values can also be used. For example, medium gray can have a Δ Reflectance of less than 5 as an acceptable down swath variation performance, while for some colored inks, like yellow and magenta, a Δ Reflectance of less than or equal to 10 can be an acceptable down swath variation performance.

As used herein, "acid number" refers to the milligrams of potassium hydroxide required to neutralize one gram of dry polymer. The acid number of the polymer may be calculated by the formula given in the following equation: Acid number = (moles of acid in polymer)*(56 grams/mole*(1000))/(total grams of polymers), where moles of acid in polymer is the total moles of all acid group titratable that comprise the polymer, and 56 is the formula weight for potassium hydroxide.

As used herein, "substituted" means that a hydrogen atom of a compound or moiety is replaced by another atom such as a carbon atom or a heteroatom, which is part of a group referred to as a substituent. Substituents include, for example, alkyl, alkoxy, aryl, aryloxy, alkenyl, alkenoxy, alkynyl, alkynoxy, thioalkyl, thioalkenyl, thioalkynyl, and thioaryl.

As used herein, "heteroatom" refers to nitrogen, oxygen, phosphorus, or sulfur.

The terms "halo" and "halogen" refer to a fluoro, chloro, bromo, or iodo substituent.

The term "cyclic" refers to having an alicyclic or aromatic ring structure, which may or may not be substituted, and may or may not include one or more heteroatoms. The term "heterocyclic" refers to a cylic compound having at least one
hetero atom. Cyclic structures include monocyclic structures, bicyclic structures, and polycyclic structures. The term "alicyclic" is used to refer to an aliphatic cyclic moiety, as opposed to an aromatic cyclic moiety.

As used herein, "alkyl" refers to a branched, unbranched, or cyclic saturated hydrocarbon group, which typically, although not necessarily, contains from 1 to about 50 carbon atoms, or 1 to about 40 carbon atoms, or 1 to about 30 carbon atoms, for example. Alkyls include, but are not limited to, methyl, ethyl, n-propyl, isopropyl, n-butyl, isobutyl, t-butyl, octyl, and decyl, for example, as well as cycloalkyl groups such as cyclopentyl, and cyclohexyl, for example. The term "lower alkyl" refers to an alkyl group having from 1 to 6 carbon atoms. The term "higher alkyl" refers to an alkyl group having more than 6 carbon atoms, for example, 7 to about 50 carbon atoms, or 7 to about 40 carbon atoms, or 7 to about 30 carbon atoms or more. As used herein, "substituted alkyl" refers to an alkyl substituted with one or more substituent groups. The term "heteroalkyl" refers to an alkyl in which at least one carbon atom is replaced with a heteroatom. If not otherwise indicated, the term "alkyl" includes unsubstituted alkyl, substituted alkyl, lower alkyl, and heteroalkyl.

As used herein, "aryl" refers to a group containing a single aromatic ring or multiple aromatic rings that are fused together, directly linked, or indirectly linked (such that the different aromatic rings are bound to a common group such as a methylene or ethylene moiety). Aryl groups described herein may contain, but are not limited to, from 5 to about 50 carbon atoms, or 5 to about 40 carbon atoms, or 5 to 30 carbon atoms or more. Aryl groups include, for example, phenyl, naphthyl, anthryl, phenanthryl, biphenyl, diphenylether, diphenylamine, and benzophenone. The term "substituted aryl" refers to an aryl group comprising one or more substituent groups. The term "heteroaryl" refers to an aryl group in which at least one carbon atom is replaced with a heteroatom. If not otherwise indicated, the term "aryl" includes unsubstituted aryl, substituted aryl, and heteroaryl.

As used herein, the term "about" is used to provide flexibility to a numerical range endpoint by providing that a given value may be "a little above" or "a little below" the endpoint. The degree of flexibility of this term can be dictated by the particular variable and would be within the knowledge of those skilled in the art to determine based on experience and the associated description herein.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

Concentrations, amounts, and other numerical data may be expressed or presented herein in a range format. It is to be understood that such a range format is used merely for convenience and brevity and thus should be interpreted flexibly to include not only the numerical values explicitly recited as the limits of the range, but also to include all the individual numerical values or sub-ranges encompassed within that range as if each numerical value and sub-range is explicitly recited. As an illustration, a numerical range of "about 1 wt% to about 5 wt%" should be interpreted to include not only the explicitly recited values of about 1 wt% to about 5 wt%, but also include individual values and sub-ranges within the indicated range. Thus, included in this numerical range are individual values such as 2, 3.5, and 4 and sub-ranges such as from 1-3, from 2-4, and from 3-5, etc. This same principle applies to ranges reciting only one numerical value. Furthermore, such an interpretation should apply regardless of the breadth of the range or the characteristics being described.

It has been recognized that an inkjet ink can be manufactured that provides acceptable DSV performance without substantially sacrificing decap. In other words, while keeping decap about the same, more significant improvements in DSV performance can be achieved. As such, the present inks can provide an acceptable DSV performance and an acceptable decap performance when printed from inkjet architecture.

In accordance with this, the present disclosure is drawn to inkjet ink compositions, ink sets, and methods, where the inkjet ink comprises a colorant, a liquid vehicle, a surfactant, and a polyurethane binder. It is noted that when discussing the present compositions and associated methods, each of these discussions can be considered applicable to each of these embodiments, whether or not they are explicitly discussed in the context of that embodiment. Thus, for example, in discussing a polyurethane binder for use in an inkjet ink, such a polyurethane binder can also be used for a method of making such an ink or an ink set, and vice versa.

Referring specifically to the polyurethane binder, this component can comprise polymerized monomers including a polyether polyol, a diisocyanate, and an acid polyol. Additionally, the polyurethane binder has a M*_{w}* from 40K to 45K and an acid number from 53 to 57.

An ink set can comprise at least one of the inks described herein. Additionally, a method of making the inkjet inks described herein can comprise reacting an acid polyol with a diisocyante to produce an acidified diisocyante, reacting the acidified diisocyante with a polyether polyol to produce a polyurethane binder, and combining the polyurethane binder with a liquid vehicle, colorant, and surfactant to produce the inkjet ink. The monomers can be reacted sequentially or simultaneously to produce the polyurethane binder. Additionally, the amount of acid polyol can be stoichiometrically controlled to provide a range of acid numbers as discussed herein.

The polyurethane binder generally can comprise polymerized monomers including a polyether polyol, a diisocyante, and an acid polyol. The polyether polyol and acid polyol can be combined and further reacted with the diisocyante to form a polyurethane binder. As such, generally, the polyurethane includes a diisocyante portion, referred to as the hard segment, and a diol, referred to as the soft segment. In one embodiment, the polyurethane binder can exclude chain extenders. A chain extender is any compound capable of polymerizing with the diisocyanate such that the chain extender resides in the hard segment of the polyurethane. In one embodiment, the chain extender can be any compound having a molecular weight of less than 500 M*_{w}* that resides in the hard segment that is not a diisocyanate. The molecular weights described herein refer to weight average molecule weights unless otherwise stated.

In one embodiment, the polyether polyol can be selected from the group of polyethylene glycol; polypropylene glycol; polytetramethylene glycol; poly(ethylene oxide) polymers; poly(propylene oxide) polymers; poly(tetramethylene oxide) polymers; copolymers thereof having terminal hydroxyl groups derived from polyhydric compounds including diols and triols; combinations thereof, and mixtures thereof. In another embodiment, the polyether polyol can be a poly(alkene C₂-C₄ oxide) polymer, where C₂-C₄ refers to the amount of carbons between oxygen atoms on the backbone of the polymer chain.

The diisocyanates, described herein, can be selected from the group of methylene diphenyl diisocyanate, hexamethylene diisocyanate, p-tetramethyl xylene diisocyanate, m-tetramethyl xylene diisocyanate, bitolylene diisocyanate, toluene diisocyanate, methylene-bis(4-cyclohexyl)diisocyanate, p-phenylene diisocyanate, isophorone diisocyanate, 1,5-naphthalene diisocyanate, and mixtures thereof. In one embodiment, the diisocyanate can be an aliphatic cyclic diisocyanate.

The acid polyol described herein can have the structure HO-(CH₂)ₙ(CR₁R₂)ₘ(CH₂)ₚ-OH where R₁ and R₂ are independently H, hydroxyl, an alkyl group, or an acid group; n ranges from 0 to 20; p ranges from 0 to 20; and m ranges from 1 to 20; wherein at least one of R₁ and R₂ is an acid group. In one embodiment, the acid polyol can have from 4 to 12 carbons.

The polyurethane binder can have various amounts of polyols and diisocyanates. Generally, the diisocyanate can be present in the polyurethane binder from about 10 wt% to about 70 wt%. In one embodiment, the diisocyanate can be present from about 25 wt% to about 35 wt%. Generally, the polyether polyol can be present in the polyurethane binder from about 20 wt% to about 80 wt%. In another embodiment, the polyether polyol can be present from about 40 wt% to about 60 wt%. Generally, the acid polyol can be present in the polyurethane binder from about 1 wt% to about 40 wt%. The acid polyol can alternatively be present from about 10 wt% to about 15 wt%. While the polyurethane binder can generally be present in the inkjet ink sufficient to provide an acceptable decap performance and acceptable DSV performance, in one embodiment, the inkjet ink can have a ratio of polyurethane binder to colorant from about 0.1:1 to about 2:1.

Generally, the colorant can be a pigment and/or dye as described herein. In one embodiment, the colorant can be an acrylic resin-dispersed pigment. Additionally, the pigment can be a self-dispersed pigment. The colorant can be present in the inkjet inks from about 0.1 wt% to about 10 wt%.

The liquid vehicle generally comprises a solvent such that the colorant, surfactant, and polyurethane binder can be dispersed therein. The liquid vehicle can comprise one solvent or additional co-solvents. In one embodiment, the liquid vehicle can include water. In another embodiment, the liquid vehicle can be an aqueous liquid vehicle including a heterocyclic organic co-solvent and a glycol.

The liquid vehicle can also comprise a surfactant. In one embodiment, the surfactant can be a nonionic surfactant. Suitable surfactants that can be used include alkyl polyethylene oxides, alkyl phenyl polyethylene oxides, polyethylene oxide block copolymers, acetylenic polyethylene oxides, polyethylene oxide (di)esters, polyethylene oxide amines, protonated polyethylene oxide amines, protonated polyethylene oxide amides, dimethicone copolyols, substituted amine oxides. The amount of surfactant added to the inkjet inks can range from 0.01 wt% to 10 wt%.

The inkjet inks of the present disclosure can provide an acceptable down swath variation performance as well as an acceptable decap performance. The acceptable down swath variation performance can be measured as having a Δ Reflectance of less than or equal to 10 measured with 0.5 second nozzle resting time. The acceptable decap performance can be measured as the inkjet pen nozzle firing a normal ink drop within 10 electric firing pulses after the nozzle is rested for 3.5 seconds. In one embodiment, the acceptable decap performance can be measured via the inkjet pen nozzle firing a normal ink drop within 8 electric firing pulses after the nozzle is rested for 3.5 seconds. In another embodiment, the acceptable down swath variation performance can be measured as having a Δ Reflectance of less than 6 measured with 0.5 second resting time. The acceptable down swath variation performance can depend on the color of the ink. In one embodiment, a black ink or gray ink, including any shades thereof, can have an acceptable down swath variation performance measured as having a Δ Reflectance of less than 5 measured with 0.5 second resting time. In another embodiment, a colored ink can have an acceptable down swath variation performance measured as having a Δ Reflectance of less than 10 measured with 0.5 second nozzle resting time; the colored ink being an ink imparting color that is not black, gray, or shades thereof. In one aspect, the colored ink can be yellow, magenta, or mixtures thereof. Additionally, in one embodiment, a colored ink can have a Δ Reflectance of less than or equal to 8 measured with 0.5 second nozzle resting time, the colored ink being an ink imparting color that is not black, gray, or shades thereof.

The present inks can also include an acrylic dispersant. The acrylic dispersant can include acrylic polymers having hydrophilic monomers including acid monomers, and hydrophobic monomers. Hydrophobic monomers that can be polymerized in the acrylic dispersant include, without limitation, styrene, p-methyl styrene, methyl methacrylate, hexyl acrylate, hexyl methacrylate, butyl acrylate, butyl methacrylate, ethyl acrylate, ethyl methacrylate, propyl acrylate, propyl methacrylate, octadecyl acrylate, octadecyl methacrylate, stearyl methacrylate, vinylbenzyl chloride, isobornyl acrylate, tetrahydrofurfuryl acrylate, 2-phenoxyethyl methacrylate, ethoxylated nonyl phenol methacrylate, isobornyl methacrylate, cyclohexyl methacrylate, t-butyl methacrylate, n-octyl methacrylate, lauryl methacrylate, trydecyl methacrylate, alkoxylated tetrahydrofurfuryl acrylate, isodecyl acrylate, isobornylmethacrylate, combinations thereof, derivatives thereof, and mixtures thereof.

Acidic monomers can be present in the acrylic dispersant from about 0.1 wt% to about 30 wt%. Acidic monomers that can be used in the acrylic dispersant include, without limitation, acrylic acid, methacrylic acid, ethacrylic acid, dimethylacrylic acid, maleic anhydride, maleic acid, vinylsulfonate, cyanoacrylic acid, vinylacetic acid, allylacetic acid, ethylidineacetic acid, propylidineacetic acid, crotonoic acid, fumaric acid, itaconic acid, sorbic acid, angelic acid, cinnamic acid, styrylacrylic acid, citraconic acid, glutaconic acid, aconitic acid, phenylacrylic acid, acryloxypropionic acid, aconitic acid, phenylacrylic acid, acryloxypropionic acid, vinylbenzoic acid, N-vinylsuccinamidic acid, mesaconic acid, methacroylalanine, acryloylhydroxyglycine, sulfoethyl methacrylic acid, sulfopropyl acrylic acid, styrene sulfonic acid, sulfoethylacrylic acid, 2-methacryloyloxymethane-1-sulfonic acid, 3-methacryoyloxypropane-1-sulfonic acid, 3-(vinyloxy)propane-1-sulfonic acid, ethylenesulfonic acid, vinyl sulfuric acid, 4-vinylphenyl sulfuric acid, ethylene phosphonic acid, vinyl phosphoric acid, vinyl benzoic acid, 2-acrylamido-2-methyl-1-propanesulfonic acid, combinations thereof, derivatives thereof, and mixtures thereof.

Additionally, the acrylic dispersants can include reactive surfactants such as functionalized ethylene glycol acrylates, including the SIPOMER® series of surfactants from Rhodia. Other non-limiting examples of reactive surfactants include HITENOL™ (polyoxyethylene alkylphenyl ether ammonium sulfate) and NOIGEN™ (polyoxyethylene alkylphenyl ether) reactive surfactants commercially available from Dai-Ichi Kogyo Seiyaku Co., Ltd. of Japan; TREM® (sulfosuccinates) commercially available from Henkel; and the MAXEMUL® (anionic phosphate ester) reactive surfactants commercially available from Uniqema of the Netherlands. Suitable grades of some of the materials listed above may include HITENOL BC-20, NOIZEN RN-30, TREM LT-40, and MAXEMUL 6106 and 6112.

The inkjet ink compositions of the present disclosure can also be suitable for use on many types of substrates of recording media, including but not limited to vinyl media, cellulose-based paper media, various cloth materials, polymeric materials (non-limitative examples of which include polyester white film or polyester transparent film), photopaper (non-limiting examples of which include polyethylene or polypropylene extruded on one or both sides of paper), metals, and/or mixtures or composites thereof. A non-limiting example of a suitable metal material is a metal in foil form made from, for example, at least one of aluminum, silver, tin, copper, alloys thereof, and/or mixtures thereof.

As previously discussed, the present inkjet inks can include a colorant dispersed in a liquid vehicle with a surfactant and a polyurethane binder. Typical liquid vehicle formulation described herein can include water, and optionally, one or more co-solvents present in total at from 0.1 wt% to 30 wt%, depending on the jetting architecture, though amounts outside of this range can also be used. Further, one or more non-ionic, cationic, and/or anionic surfactant can be present, ranging from 0.01 wt% to 10 wt%. In addition to the colorant and polyurethane binder, the balance of the formulation can be purified water, or other vehicle components known in the art, such as biocides, viscosity modifiers, materials for pH adjustment, sequestering agents, preservatives. In one embodiment, the liquid vehicle can be predominantly water.

Classes of co-solvents that can be used can include organic co-solvents including aliphatic alcohols, aromatic alcohols, diols, glycol ethers, polyglycol ethers, caprolactams, formamides, acetamides, and long chain alcohols. Examples of such compounds include primary aliphatic alcohols, secondary aliphatic alcohols, 1,2-alcohols, 1,3-alcohols, 1,5-alcohols, ethylene glycol alkyl ethers, propylene glycol alkyl ethers, higher homologs (C₆-C₁₂) of polyethylene glycol alkyl ethers, N-alkyl caprolactams, unsubstituted caprolactams, both substituted and unsubstituted formamides, both substituted and unsubstituted acetamides. Consistent with the formulation of this disclosure, various other additives may be employed to optimize the properties of the ink composition for specific applications. Examples of these additives are those added to inhibit the growth of harmful microorganisms. These additives may be biocides, fungicides, and other microbial agents, which are routinely used in ink formulations. Examples of suitable microbial agents include, but are not limited to, NUOSEPT® (Nudex, Inc.), UCARCIDE™ (Union carbide Corp.), VANCIDE® (R.T. Vanderbilt Co.), PROXEL® (ICI America), and combinations thereof.

Sequestering agents, such as EDTA (ethylene diamine tetra acetic acid), may be included to eliminate the deleterious effects of heavy metal impurities, and buffer solutions may be used to control the pH of the ink. From 0 wt% to 2 wt%, for example, can be used. Viscosity modifiers and buffers may also be present, as well as other additives known to those skilled in the art to modify properties of the ink as desired. Such additives can be present at from 0 wt% to 20 wt%.

The following examples illustrate a number of embodiments of the present compositions, systems, and methods that are presently known. However, it is to be understood that the following are only exemplary or illustrative of the application of the principles of the present compositions, systems, and methods. Thus, while the present compositions, systems, and methods have been described above with particularity, the following examples provide further detail in connection with what are presently deemed to be the acceptable embodiments.

### Example 1 - Inkjet Ink Compositions

Table I provides the ink formulations used to make 6 pigmented inkjet ink compositions in accordance with embodiments of the present disclosure. Three light cyan inks and three light magenta inks were prepared using ink vehicle formulations, all having components as listed in Table 1.

**Table 1**

| **Vehicle Component** | **Amounts (wt%)** |
|---|---|
| Heterocyclic solvent | 3-11 |
| Buffer | 0.5-1 |
| Anionic surfactant | 0.1-0.5 |
| Non-ionic surfactant | 0.1-0.5 |
| Fluoro surfactant | 0.01-0.2 |
| Biocide | 0.01-0.2 |
| Polyurethane resin | 0.1-2.5 |
| Styrene acrylic resin | 0.5-2.5 |
| Glycol | 1-5 |
| Total pigment | 0.5-5 |
| Water | balance |

### Example 2 - Comparative Inkjet Ink Compositions

Three comparative light cyan inks and three comparative light magenta inks were prepared using similar ink formulations, all of which are within the ranges as set forth in Table 1, except for the polyurethane binder. Notably, each ink corresponds to a comparative ink; i.e., LC#1 of Example 1 has the same ink formulation of LC#1 of Example 2 (except for the polyurethane binder), LC#2 of Example 1 has the same ink formulation of LC#2 of Example 2 (except for the polyurethane binder), and so forth. Notably, the polyurethane binder used in the inks of Example 1 had the same general monomers (an acid polyol, a diisocyante, and a polyether polyol) and M*_{w}* of the polyurethane binder used in the comparative inks of Example 2 except that the polyurethane binder of Example 1 had an acid number of 55 while the acid number of the polyurethane binder used in the comparative inks of Example 2 had an acid number of 50.

### Example 3 - Decel and DSV Performance Data

The inks of Example 1 and Example 2 were tested for decap and DSV. Table 2 provides the results on the tests. The values below represent an average of 2 runs for each ink.

**Table 2**

| | **Example 1 Inks** | | | | | | **Example 2 Inks** | | | | | |
|---|---|---|---|---|---|---|---|---|---|---|---|---|
| | LC #1 | LC #2 | LC #3 | LM #1 | LM #2 | LM #3 | LC #1 | LC #2 | LC #3 | LM #1 | LM #2 | LM #3 |
| Decap Performance (# of electric firing pulses after a 3.5 sec. pen rest to print a normal ink drop) | 9.5 | 6.5 | 11 | 12 | 5.5 | 5.5 | 6.5 | 5.5 | 9.5 | 10.5 | 4.5 | 5.5 |
| DSV Performance (Δ Reflectance) | 3.9 | 9.8 | 5.2 | 5.2 | 7.7 | 3.5 | 6.3 | 16.8 | 10.8 | 6.8 | 12.7 | 6.9 |

| | | | | | | | | | | | | |
|---|---|---|---|---|---|---|---|---|---|---|---|---|
| LC = Light Cyan LM = Light Magenta | | | | | | | | | | | | |

As can been seen from Table 2, the Example 1 inks provided a broader range of acceptable DSV and decap than the comparative inks, where acceptable DSV performance was measured as having a Δ Reflectance of less than or equal to 10 and the acceptable decap performance was measured as the inkjet pen nozzle firing a normal ink drop within 10 electric firing pulses after the nozzle is rested for 3.5 seconds. The average decap performance for the light cyan inks of Example 1 was 9.0 while the comparative light cyan inks provided an average of 7.2, which is very similar. Likewise, the average decap performance for the light magenta inks of Example 1 was 7.7 while the comparative light magenta inks provided an average of 6.8, which is very similar. However, the average DSV performance for the light cyan inks of Example 1 was 6.3 while the comparative light cyan inks provided an 11.3 average. Additionally, the average DSV performance for the light magenta inks of Example 1 was 5.5 while the comparative light magenta inks provided an 8.8 average. As such, the inks of Example 1 can significantly increase DSV performance of an inkjet ink while maintaining acceptable decap performance.

Thus, in one embodiment, the inkjet ink can provide a 25% increase in DSV performance over a comparative ink (measured as the difference between the DSV performance between the inventive ink and the comparative ink, divided by the DSV performance of the inventive ink, multiplied by 100 to convert to %) while maintaining a decap performance within 20% of the comparative ink (measured as the difference between the decap performance between the inventive ink and the comparative ink, divided by the decap performance of the inventive ink, multiplied by 100 to convert to %). In another embodiment, the present ink can provide a 50% increase, or even a 75% increase in DSV performance while maintaining a decap performance within 20% of the comparative ink as described above.

## Claims

1. A polyurethane-containing inkjet ink, comprising:
a colorant;
a liquid vehicle;
a surfactant; and
a polyurethane binder, the polyurethane binder comprising polymerized monomers including a polyether polyol, a diisocyanate, and an acid polyol, wherein the polyurethane binder has a M_{w} from 40K to 45K and an acid number from 53 to 57.

2. The polyurethane-containing inkjet ink of claim 1, wherein the polyether polyol is selected from the group of polyethylene glycol; polypropylene glycol; polytetramethylene glycol; poly(ethylene oxide) polymers; polypropylene oxide) polymers; poly(tetramethylene oxide) polymers; copolymers thereof having terminal hydroxyl groups derived from polyhydric compounds including diols and triols; combinations thereof, and mixtures thereof.

3. The polyurethane-containing inkjet ink of claims 1 or 2, wherein the polyether polyol is a poly(alkene C₂-C₄ oxide) polymer.

4. The polyurethane-containing inkjet ink of any one of claims 1 to 3, wherein the diisocyanate is selected from the group of methylene diphenyl diisocyanate, hexamethylene diisocyanate, p-tetramethyl xylene diisocyanate, m-tetramethyl xylene diisocyanate, bitolylene diisocyanate, toluene diisocyanate, methylene-bis(4-cyclohexyl)diisocyanate, p-phenylene diisocyanate, isophorone diisocyanate, 1 ,5-naphthalene diisocyanate, and mixtures thereof.

5. The polyurethane-containing inkjet ink of any one of claims 1 to 4, wherein the diisocyanate is an aliphatic cyclic diisocyanate.

6. The polyurethane-containing inkjet ink of any one of claims 1 to 5, wherein the acid polyol has the structure HO-(CH₂)ₙ(CRiR₂)ₘ(CH₂)p-OH where Ri and R₂ are independently H, hydroxyl, an alkyl group, or an acid group; n ranges from 0 to 20; p ranges from 0 to 20; and m ranges from 1 to 20; wherein at least one of Ri and R₂ is an acid group.

7. The polyurethane-containing inkjet ink of any one of claims 1 to 6, wherein the acid polyol has from 4 to 12 carbons.

8. The polyurethane-containing inkjet ink of any one of claims 1 to 7, wherein the colorant is an acrylic resin-dispersed pigment.

9. The polyurethane-containing inkjet ink of any one of claims 1 to 8, wherein the liquid vehicle is an aqueous liquid vehicle including a heterocyclic organic cosolvent and a glycol.

10. The polyurethane-containing inkjet ink of any one of claims 1 to 9, wherein the surfactant is a nonionic surfactant.

11. An ink set comprising a polyurethane-containing inkjet ink of any of one of claims 1 to 10.

12. A method of making the polyurethane-containing inkjet ink of any one of claims 1 to 10, comprising:
reacting the acid polyol with the diisocyanate to produce an acidified diisocyanate;
reacting the acidified diisocyanate with the polyether polyol to produce the polyurethane binder;
combining the polyurethane binder with the liquid vehicle, colorant, and surfactant to produce the inkjet ink.

## Patentansprüche

1. Polyurethanhaltige Tintenstrahltinte, Folgendes umfassend:
ein Farbmittel;
eine flüssige Trägersubstanz;
ein Tensid; und
ein Polyurethanbindemittel, wobei das Polyurethanbindemittel polymerisierte Monomere umfasst, einschließlich eines Polyetherpolyols, eines Diisocyanats und eines Säurepolyols, wobei das Polyurethanbindemittel eine M_{w} von 40k bis 45k und eine Säurezahl von 53 bis 57 aufweist.

2. Polyurethanhaltige Tintenstrahltinte nach Anspruch 1, wobei das Polyetherpolyol ausgewählt ist aus der Gruppe aus Polyethylenglycol; Polypropylenglycol; Polytetramethylenglycol; Poly(ethylenoxid)polymeren; Polypropylenoxid)polymeren; Poly(tetramethylenoxid)polymeren; Copolymeren davon mit endständigen Hydroxygruppen, die von mehrwertigen Verbindungen stammen, einschließlich Diolen und Triolen; Kombinationen daraus und Mischungen davon.

3. Polyurethanhaltige Tintenstrahltinte nach Anspruch 1 oder 2, wobei das Polyetherpolyol ein Poly(alken-C₂-C₄-oxid)polymer ist.

4. Polyurethanhaltige Tintenstrahltinte nach einem der Ansprüche 1 bis 3, wobei das Diisocyanat ausgewählt ist aus der Gruppe von Methylendiphenyldiisocyanat, Hexamethylendiisocyanat, p-Tetramethylxyloldiisocyanat, m-Tetramethylxyloldiisocyanat, Bitolylendiisocyanat, Toluoldiisocyanat, Methylen-bis(4-cyclohexyl)diisocyanat, p-Phenylendiisocyanat, Isophorondiisocyanat, 1,5-Naphthalendiisocyanat und Mischungen davon.

5. Polyurethanhaltige Tintenstrahltinte nach einem der Ansprüche 1 bis 4, wobei das Diisocyanat ein aliphatisches cyclisches Diisocyanat ist.

6. Polyurethanhaltige Tintenstrahltinte nach einem der Ansprüche 1 bis 5, wobei das Säurepolyol die Struktur HO-(CH₂)ₙ(CRiR₂)ₘ(CH₂)p-OH aufweist, wobei Ri und R₂ unabhängig H, Hydroxyl, eine Alkylgruppe oder eine Säuregruppe sind; n von 0 bis 20 reicht; p von 0 bis 20 reicht; und m von 1 bis 20 reicht; wobei wenigstens eines von Ri und R₂ eine Säuregruppe ist.

7. Polyurethanhaltige Tintenstrahltinte nach einem der Ansprüche 1 bis 6, wobei das Säurepolyol 4 bis 12 Kohlenstoffatome aufweist.

8. Polyurethanhaltige Tintenstrahltinte nach einem der Ansprüche 1 bis 7, wobei das Farbmittel ein acrylharzdispergiertes Pigment ist.

9. Polyurethanhaltige Tintenstrahltinte nach einem der Ansprüche 1 bis 8, wobei die flüssige Trägersubstanz eine wässrige flüssige Trägersubstanz einschließlich eines heterocyclischen organischen Colösungsmittels und eines Glycols ist.

10. Polyurethanhaltige Tintenstrahltinte nach einem der Ansprüche 1 bis 9, wobei das Tensid ein nichtionisches Tensid ist.

11. Tintensatz, umfassend eine polyurethanhaltige Tintenstrahltinte nach einem der Ansprüche 1 bis 10.

12. Verfahren zum Herstellen der polyurethanhaltigen Tintenstrahltinte nach einem der Ansprüche 1 bis 10, Folgendes umfassend:
Reagierenlassen des Säurepolyols mit dem Diisocyanat, um ein angesäuertes Diisocyanat zu erzeugen;
Reagierenlassen des angesäuerten Diisocyanats mit dem Polyetherpolyol, um das Polyurethanbindemittel zu erzeugen;
Kombinieren des Polyurethanbindemittels mit der flüssigen Trägersubstanz, dem Farbmittel und dem Tensid, um die Tintenstrahltinte zu erzeugen.

## Revendications

1. Encre pour jet d'encre contenant un polyuréthane, comprenant :
un colorant ;
un support liquide ;
un tensioactif ; et
un liant de polyuréthane, le liant de polyuréthane comprenant des monomères polymérisés comportant un polyol de polyéther, un diisocyanate et un polyol d'acide, dans laquelle le liant de polyuréthane présente une masse moléculaire allant de 40 000 à 45 000 et un indice d'acidité allant de 53 à 57.

2. Encre pour jet d'encre contenant un polyuréthane selon la revendication 1, dans laquelle le polyol de polyéther est sélectionné dans le groupe constitué par le polyéthylène glycol ; le polypropylène glycol ; le polytétraméthylène glycol ; les polymères d'oxyde de polyéthylène ; les polymères d'oxyde de polypropylène ; les polymères d'oxyde de polytétraméthylène ; les copolymères de ces derniers présentant des groupes terminaux hydroxyles dérivés de composés polyhydriques comportant les diols et les triols ; les combinaisons de ces derniers et les mélanges de ces derniers.

3. Encre pour jet d'encre contenant un polyuréthane selon la revendication 1 ou 2, dans laquelle le polyol de polyéther est un polymère d'oxyde de polyalcène en C2-C4.

4. Encre pour jet d'encre contenant un polyuréthane selon l'une quelconque des revendications 1 à 3, dans laquelle le diisocyanate est sélectionné dans le groupe constitué par le méthylène diphényle diisocyanate, l'hexaméthylène diisocyanate, le p-tétraméthyle xylène diisocyanate, le m-tétraméthyle xylène diisocyanate, le bitolylène diisocyanate, le toluène diisocyanate, le méthylène-bis(4-cyclohexyl)diisocyanate, le p-phénylène diisocyanate, l'isophorone diisocyanate, le 1,5-naphtalène diisocyanate et les mélanges de ces derniers.

5. Encre pour jet d'encre contenant un polyuréthane selon l'une quelconque des revendications 1 à 4, dans laquelle le diisocyanate est un diisocyanate cyclique aliphatique.

6. Encre pour et d'encre contenant un polyuréthane selon l'une quelconque des revendications 1 à 5, dans laquelle le polyol d'acide présente la structure HO-(CH₂)ₙ(CRiR₂)ₘ(CH₂)p-OH, où Ri et R₂ sont indépendamment un atome d'hydrogène, un groupe hydroxyle, un groupe alkyle ou un groupe d'acides ; n se situe dans la plage allant de 0 à 20 ; p se situe dans la plage allant de 0 à 20 ; et m se situe dans la plage allant de 1 à 20 ; dans laquelle Ri et/ou R₂ est un groupe d'acides.

7. Encre pour jet d'encre contenant un polyuréthane selon l'une quelconque des revendications 1 à 6, dans laquelle le polyol d'acide présente de 4 à 12 atomes de carbone.

8. Encre pour jet d'encre contenant un polyuréthane selon l'une quelconque des revendications 1 à 7, dans laquelle le colorant est un pigment dispersé dans une résine acrylique.

9. Encre pour jet d'encre contenant un polyuréthane selon l'une quelconque des revendications 1 à 8, dans laquelle le support liquide est un support liquide aqueux comportant un co-solvant organique hétérocyclique et un glycol.

10. Encre pour jet d'encre contenant un polyuréthane selon l'une quelconque des revendications 1 à 9, dans laquelle le tensioactif est un tensioactif non-ionique.

11. Ensemble d'encres comprenant une encre pour jet d'encre contenant un polyuréthane selon l'une quelconque des revendications 1 à 10.

12. Procédé de fabrication de l'encre pour jet d'encre contenant un polyuréthane selon l'une quelconque des revendications 1 à 10, comprenant les étapes suivantes :
faire réagir le polyol d'acide avec le diisocyanate pour produire un diisocyanate acidifié ;
faire réagir le diisocyanate acidifié avec le polyol de polyéther pour produire le liant de polyuréthane ;
combiner le liant de polyuréthane avec le support liquide, le colorant et le tensioactif pour produire l'encre pour jet d'encre.
